# EUROPEAN PATENT APPLICATION

(11) **EP 4 723 002 A1**
(43) Date of publication of application: **08.04.2026**
(21) Application number: 25201134.1
(22) Date of filing: 09.09.2025
(51) Int. Cl.: G06Q 10/047, G09B 19/16, B63B 79/10, B63B 27/30

(54) **MANAGING PASSENGER TRANSPORT BETWEEN MARINE VESSELS**

(30) Priority: 04.10.2024 SE 2450988
(71) Applicant: CPAC Systems AB, 401 23 Göteborg (SE)
(72) Inventor: MÅNESKIÖLD, Axel, GÖTEBORG (SE); STRÖMBERG, Valter, MÖLNDAL (SE); LUND, Erik, MÖLNDAL (SE)
(74) Representative: Ström & Gulliksson AB

(57) **Abstract**

A computer system (100; 700) for passenger transport management from a first marine vessel (10) to a second marine vessel (20), the computer system (100; 700) comprising processing circuitry (102; 702) configured to: identify at least one anomaly (34) in an outer surface (22) of the second marine vessel (20), the anomaly (34) indicating a deviation in the outer surface (22) from a substantially flat surface and being adapted to accommodate one or more of the first marine vessel (10) and a passenger transported thereby; based on the anomaly (34), determine an accommodating location (24) adapted to accommodate the first marine vessel (10) for a subsequent transport of said passengers from the first marine vessel (10) to the second marine vessel (20); and generate one or more driving instructions (36) adapted to cause positioning of the first marine vessel (10) at the accommodating location (24).

## Description

### TECHNICAL FIELD

The disclosure relates generally to safety at sea. In particular aspects, the disclosure relates to managing passenger transport between marine vessels. The disclosure can be applied to marine vessels, such as leisure boats, ships, cruise ships, fishing vessels, yachts, ferries, among other vehicle types. Although the disclosure may be described with respect to a particular marine vessel, the disclosure is not restricted to any particular marine vessel.

### BACKGROUND

The management of passenger transport between marine vessels is an important aspect of maritime operations. This process often involves the transfer of individuals, including ordinary passengers as well as specialized personnel such as pilots, crew members, medical staff, and law enforcement officers, from a first, typically smaller, vessel to a second, typically larger, vessel. Traditional methods rely heavily on the visual judgment of the smaller vessel's operator to manually look at the larger vessel to find destinations where the transport can be carried out and subsequent navigation thereto. While challenging under normal circumstances, this task becomes particularly arduous under adverse conditions such as rough seas, poor visibility, or nighttime operations, thereby increasing the risk of accidents and operational inefficiencies.

### SUMMARY

One of the primary challenges of such passenger transport relate to the alignment control of the smaller vessel with the larger vessel. This is due to the dynamic and unpredictable nature of marine environments. Factors such as wave action, wind, and current can cause constant relative movement between the vessels, making precise alignment exceptionally difficult. Such alignment is a prerequisite to provide a safe and efficient transfer of people between the vessels. Additionally, the larger vessel's structure may have various protrusions, indentations, and other features that are hard to discern visually, especially in poor lighting or rough seas. These complexities necessitate rapid and accurate adjustments by the operator, who must continuously monitor and adapt to the changing conditions.

In the prior art, the lack of automated and reliable alignment systems means that operators are left to rely on their skill and experience, which can vary widely. This dependence on human judgment introduces a significant margin for error, leading to potential collisions, injuries, and operational delays. Furthermore, the stress and fatigue experienced by operators in such challenging conditions can further impair their ability to make quick and accurate decisions.

Given these challenges, there is a clear need for improved approaches that can enhance the safety and efficiency of passenger transport between vessels. Ideally, such improved approaches would reduce reliance on human judgment by providing precise and reliable alignment capabilities, even in adverse conditions and/or poor visibility and where the larger vessel is of a significant size (for example large ferries). Such improvements would not only reduce the risk of accidents but also streamline operations, making maritime transport safer and more efficient.

In summary, there is a need for advancements in passenger transport between marine vessel that address the shortcomings of the prior art mentioned above and others.

In a first aspect of this disclosure there is provided a computer system for passenger transport management from a first marine vessel to a second marine vessel, the computer system comprising processing circuitry configured to identify at least one anomaly in an outer surface of the second marine vessel, the anomaly indicating a deviation in the outer surface from a substantially flat surface and being adapted to accommodate one or more of the first marine vessel and a passenger transported thereby; based on the anomaly, determine an accommodating location adapted to accommodate the first marine vessel for a subsequent transport of said passengers from the first marine vessel to the second marine vessel; and generate one or more driving instructions adapted to cause positioning of the first marine vessel at the accommodating location.

The first aspect of the disclosure may seek to manage passenger transport between vessels at sea. A technical benefit may include providing automated and precise alignment capabilities that reduce reliance on human judgment, enhance safety, and improve efficiency in passenger transport between vessels, even in challenging marine conditions.

Optionally in some examples, including in at least one preferred example, the processing circuitry is further configured to obtain sensing data of the outer surface from one or more sensors mounted to the first marine vessel; and identify the at least one anomaly by processing the sensing data. A technical benefit may include enhanced accuracy in identifying potential surfaces of the second vessel that could accommodate the first vessel by using real-time sensing data to detect anomalies.

Optionally in some examples, including in at least one preferred example, the sensors comprising distance sensors, the sensing data comprising distance data, the processing circuitry being further configured to identify one or more portions of the lidar data involving absence and/or deviations in distance measurements; and identify the at least one anomaly where said one or more portions are identified. A technical benefit includes the ability to gather comprehensive environmental data under various conditions, enhancing the reliability of anomaly detection.

Optionally in some examples, including in at least one preferred example, the distance sensors are one or more of lidar sensors and radar sensors. A technical benefit includes the ability to gather comprehensive environmental data under various conditions, enhancing the reliability of anomaly detection.

Optionally in some examples, including in at least one preferred example, the sensors comprising cameras, the sensing data comprising image data, the processing circuitry being further configured to process the image data to identify the anomaly. A technical benefit may include enhanced accuracy in identifying potential surfaces of the second vessel that could accommodate the first vessel by using image data to detect anomalies.

Optionally in some examples, including in at least one preferred example, the sensors comprising positioning sensors, the sensing data comprising positioning data indicating a position of the accommodating location. A technical benefit may include enhanced accuracy in identifying potential surfaces of the second vessel that could accommodate the first vessel by using positioning data to detect anomalies.

Optionally in some examples, including in at least one preferred example, the sensors comprising inertial measurement units, IMUs, the sensing data comprising IMU data. A technical benefit may include enhanced accuracy in identifying potential surfaces of the second vessel that could accommodate the first vessel by using IMU data to detect anomalies.

Optionally in some examples, including in at least one preferred example, the processing circuitry is further configured to adjust a sensitivity of the sensors based on environmental conditions. A technical benefit may include enhanced adaptability and accuracy in varying weather and sea states, ensuring reliable sensor performance.

Optionally in some examples, including in at least one preferred example, the first vessel being in operative communication with the second vessel, the first vessel being configured to obtain vessel properties of the outer surface of the second vessel from the second vessel, wherein the processing circuitry is configured to identify the at least one anomaly based on the vessel properties of the outer surface. A technical benefit may include access to precise and up-to-date structural data from the second vessel, improving anomaly identification accuracy.

Optionally in some examples, including in at least one preferred example, the first vessel being in operative communication with an external server, the first vessel being configured to obtain vessel properties of the outer surface of the second vessel from the external server, wherein the processing circuitry is configured to identify the at least one anomaly based on the vessel properties of the outer surface. A technical benefit may include leveraging centralized data for comprehensive and current information, enhancing the reliability of passenger transport management.

Optionally in some examples, including in at least one preferred example, the second vessel is moving. A technical benefit may include the ability to dynamically adjust passenger transport management, ensuring safe and efficient passenger transfer even when the second vessel is in motion.

Optionally in some examples, including in at least one preferred example, the processing circuitry is configured to automatically set a predefined speed based on the driving instructions. A technical benefit may include obtaining a suitable speed for enhanced safety and precision during alignment.

Optionally in some examples, including in at least one preferred example, the processing circuitry is configured to cause autonomous control of the first marine vessel along a generated alignment path based on the generated driving instructions, the alignment path being generated from a current position of the first marine vessel to the accommodating location. A technical benefit may include reducing operator workload and increasing alignment accuracy through automated navigation.

Optionally in some examples, including in at least one preferred example, the processing circuitry is configured control a display device of the first marine vessel to display the driving instruction as visual guidance. A technical benefit may include providing clear and intuitive navigation cues to the operator, enhancing decision-making and alignment operations.

Optionally in some examples, including in at least one preferred example, the visual guidance comprises a first visual cue at a visual representation of the first marine vessel and a second visual cue at a visual representation of the second marine vessel, the aligning of the first and second visual cues indicating a correct positioning of the first marine vessel at the accommodating location. A technical benefit may include facilitating precise alignment by visually confirming positions of the vessels, reducing the risk of errors.

Optionally in some examples, including in at least one preferred example, the processing circuitry is configured to provide a plurality of suggestions of accommodating locations to the display device. A technical benefit may include offering flexibility and choice in accommodating locations, allowing operators to select the most suitable location based on current conditions.

Optionally in some examples, including in at least one preferred example, the processing circuitry is further configured to generate a 3D model of the second marine vessel; and cause the display device to display the generated 3D model. A technical benefit may include enhancing spatial awareness and planning by providing a detailed visual representation of the operating environment.

Optionally in some examples, including in at least one preferred example, the anomaly being indicative of one or more of: a reflective element attached to the outer surface; a transportation structure mounted to the second marine vessel, and an opening in the outer surface of the second marine vessel. A technical benefit may include improving alignment accuracy by clearly identifying and leveraging structural features.

Optionally in some examples, including in at least one preferred example, the processing circuitry is further configured to obtain historical anomaly data being indicative of previous aligning events; and identify said at least one anomaly based on the historical anomaly data. A technical benefit may include enhancing prediction accuracy and alignment strategies by learning from past experiences.

Optionally in some examples, including in at least one preferred example, the processing circuitry is further configured to actuate an alert mechanism of the first marine vessel to cause a notification in response to an identification of said at least one anomaly. A technical benefit may include increasing situational awareness and safety by promptly alerting operators to relevant information.

Optionally in some examples, including in at least one preferred example, the processing circuitry is further configured to generate a prioritization scheme of a plurality of anomalies based on relative spatial properties thereof. A technical benefit may include improving alignment efficiency by prioritizing the most suitable accommodating locations based on spatial considerations.

Optionally in some examples, including in at least one preferred example, the processing circuitry is further configured to provide force feedback to a steering device of the first marine vessel based on the driving instructions. A technical benefit may include enhancing operator control and precision by simulating real-world forces during operating maneuvers in passenger transport management.

In a second aspect of this disclosure there is provided a marine vessel comprising the computer system of the first aspect.

The second aspect of the disclosure may seek to manage passenger transport between vessels at sea. A technical benefit may include providing automated and precise alignment capabilities that reduce reliance on human judgment, enhance safety, and improve efficiency in passenger transport between vessels, even in challenging marine conditions.

In a third aspect of this disclosure there is provided a computer-implemented method for passenger transport management from a first marine vessel to a second marine vessel, comprising identifying by processing circuitry of a computer system at least one anomaly in an outer surface of the second marine vessel, the anomaly indicating a deviation in the outer surface from a substantially flat surface and being adapted to accommodate one or more of the first marine vessel and a passenger transported thereby; based on the anomaly, determining by the processing circuitry an accommodating location adapted to accommodate the first marine vessel for a subsequent transport of said passengers from the first marine vessel to the second marine vessel; and generating by the processing circuitry one or more driving instructions adapted to cause positioning of the first marine vessel at the accommodating location.

The third aspect of the disclosure may seek to manage passenger transport between vessels at sea. A technical benefit may include providing automated and precise alignment capabilities that reduce reliance on human judgment, enhance safety, and improve efficiency in passenger transport between vessels, even in challenging marine conditions.

In a fourth aspect of this disclosure there is provided a computer program product comprising program code for performing, when executed by the processing circuitry, the method of the third aspect.

The fourth aspect of the disclosure may seek to enable new marine vessels and/or legacy marine vessels to be conveniently configured, by software installation/update, to improve the management of passenger transport between vessels at sea. A technical benefit may include providing automated and precise alignment capabilities that reduce reliance on human judgment, enhance safety, and improve efficiency in passenger transport between vessels, even in challenging marine conditions.

In a fifth aspect of this disclosure there is provided a non-transitory computer-readable storage medium comprising instructions, which when executed by the processing circuitry, cause the processing circuitry to perform the method of the third aspect. The fifth aspect of the disclosure may seek to enable new marine vessels and/or legacy marine vessels to be conveniently configured, by software installation/update, to manage passenger transport between vessels at sea effectively. A technical benefit may include providing automated and precise alignment capabilities that reduce reliance on human judgment, enhance safety, and improve efficiency in passenger transport between vessels, even in challenging marine conditions.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary marine vessel, according to an example.
**FIG. 2** is an exemplary schematic illustration of exemplary components involved in the passenger transport management described herein, according to an example.
**FIG. 3A** is an exemplary schematic illustration of passenger transport management, showing a first part of a passenger transport management where a first marine vessel is approaching a second marine vessel, according to an example.
**FIG. 3B** is a continuation of the exemplary schematic illustration of **FIG. 3A****,** showing a second part of the passenger transport management where a predefined area has been identified based on anomalies in the sensing data.
**FIG. 3C** is a continuation of the exemplary schematic illustration of **FIG. 3B****,** showing a third part of the passenger transport management where an alignment path is followed towards the predefined area.
**FIG. 3D** is a continuation of the exemplary schematic illustration of **FIG. 3C****,** showing a fourth part of the passenger transport management an alignment path is finished and the first marine vessel is in alignment with the second marine vessel.
**FIG. 4** is an exemplary schematic illustration of obtaining anomaly data from a system of a second marine vessel, according to an example.
**FIG. 5** is an exemplary schematic illustration of obtaining anomaly data from an external server, according to an example.
**FIG. 6** is an exemplary flowchart illustration of a method for passenger transport management from a first marine vessel to a second marine vessel.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure addresses one or more of the deficiencies mentioned above by providing approaches for managing passenger from a first marine vessel to a second marine vessel. These approaches identify at least one anomaly in an outer surface of the second marine vessel. The anomalies indicate deviations from a substantially flat surface that are adapted to accommodate the first marine vessel and facilitate the transport of passengers, signifying locations where the accommodation of passengers is possible. Driving instructions are then generated which aims to position the first marine vessel at this accommodating location. These driving instructions can either guide the operator visually or be used to autonomously control the first marine vessel, thereby reducing the burden on the operator and minimizing the risk of human error.

These approaches can offer a higher level of precision and reliability compared to traditional methods. The automated detection and alignment processes may reduce the dependency on the operator's visual judgment, addressing the limitations of human perception and reaction time. This is especially useful in adverse conditions where visibility is poor, where the second marine vessel is moving, and/or where sea conditions are harsh, ultimately providing technical advantages involving consistent performance and safety in a wide range of maritime environments.

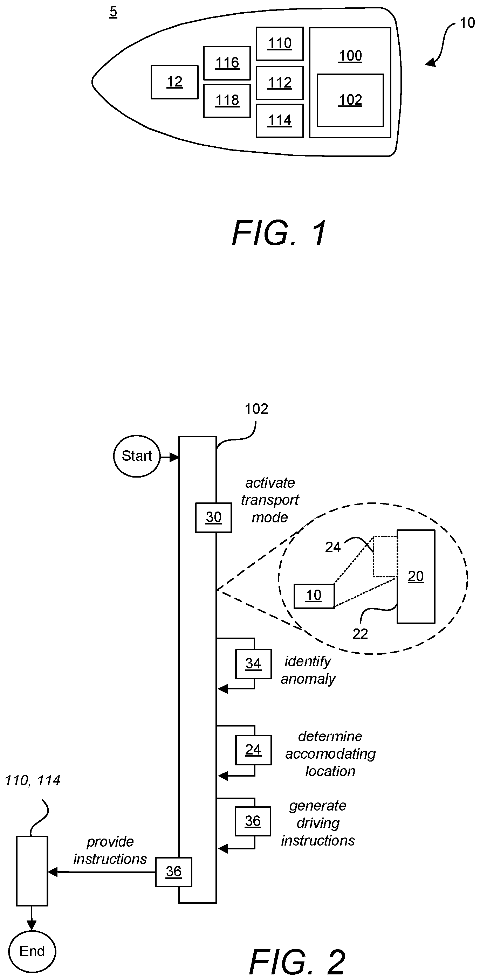

**FIG. 1** is an exemplary marine vessel **10** where aspects and examples described herein can be applied. In non-limiting examples, the marine vessel **10** is a leisure boat, ship, cruise ship, fishing vessel, yacht, ferry, or the like. The marine vessel **10** is adapted to operate in surroundings **5** at bodies of water, e.g., a sea, ocean, lake, river, bay, gulf, strait, channel, reservoir, fjord, marsh, swamp, etc. The surroundings **5** can include a variety of obstacles and environmental features. These surroundings **5** often involve other vessels, islands, marine wildlife, submerged objects, floating debris, and other common obstacles found in marine environments. The marine vessel **10** may be an electric marine vessel, gasoline-powered marine vessel, diesel-powered marine vessel, or the like.

The marine vessel **10** comprises a computer system **100** having processing circuitry **102.** The processing circuitry **102** is a central component responsible for executing various functions related to passenger transport management. The processing circuitry **102** is designed to process input from one or more components in order to execute algorithms for passenger transport and vessel alignment.

The marine vessel **10** comprises a display device **110** having a user interface. This user interface can be designed to support multiple forms of input to cater to different operational environments and user preferences. Examples may include voice commands, touchscreens, or haptic feedback mechanisms. Variations may include combined input methods, such as voice and touch. The display device **110** may include a touch panel or the like. The display device **110** may receive inputs, such as an operator request, to trigger activation of a passenger transport mode.

The user interface of the display device **110** is typically graphical, such as a digital display screen mounted on the vessel's **10** control panel. The display device **110** provides visual feedback in the form of graphical indications. The display device **110** may be complemented with audio alerts that inform the operator of events and/or actions required. Variations of the display device **110** may include heads-up displays (HUDs) for augmented reality navigation or portable devices that can be carried by crew members.

The marine vessel **10** comprises an advanced driver assistance system (ADAS) **112.** The ADAS **112** integrates with the computer system **100** to provide navigational aids and automate certain functions such as steering and throttle control. The ADAS **112** utilizes data from onboard sensors and environmental data services to maintain alignment paths and improve the efficiency of passenger transport operations. For example, the ADAS **112** can automatically adjust the vessel's **10** course to avoid obstacles while navigating towards other marine vessels. Variations of the ADAS **112** may include adaptive cruise control for maintaining safe speeds, collision avoidance systems, and automated docking features.

The marine vessel **10** comprises an environmental data service **114.** The environmental data service **114** is responsible for collecting and processing environmental data relevant to the vessel's **10** operation. Examples of such data include one or more of wind speed and direction, sea currents, weather conditions, and water temperature. The environmental data service **114** interfaces with the processing circuitry **102** to provide inputs that can enhance the accuracy of passenger transport operations and decision-making processes. Variations of the environmental data service **114** may include integration with satellite-based weather forecasting systems, real-time oceanographic data services, and/or local environmental sensors deployed around the vessel **10.**

The marine vessel **10** comprises an alert mechanism **116.** The processing circuitry **102** may be configured to actuate this mechanism to issue various notifications to the vessel's **10** operator, for example relating to anomaly identification. These alerts can take various forms, such as audible alarms, visual signals on the display device **110,** or even haptic feedback.

The marine vessel **10** comprises a steering device **118,** optionally integrated with force feedback capabilities. The processing circuitry **102** may be configured to provide force feedback to the steering device **118,** for example relating to an alignment path and/or obstacle avoidance. This feedback can simulate the physical forces encountered during navigation, such as resistance when turning or aligning with an accommodating location. By doing so, the processing circuitry **102** can offer a more intuitive steering experience, helping the operator sense and respond to the vessel's **10** movements effectively.

The marine vessel **10** comprises one or more sensors **12,** which can include but are not limited to lidar sensors, sonar sensors, radar sensors, cameras, positioning sensors and inertial measurement units, IMUs. These sensors may be arranged around the vessel **10** to monitor its surroundings **5** and detect other vessels and/or obstacles. Lidar sensors provide high-resolution 3D mapping capabilities, sonar sensors are effective in underwater detection, radar sensors offer long-range detection in various weather conditions, and cameras provide visual confirmation and identification. The radar sensors may be 4D radar sensors. The IMUs provide motion tracking and stability by measuring acceleration, rotation, and other dynamic movements of the vessel **10.** Positioning sensors, such as GPS, GLONASS, and GNSS, provide global location data and navigation capabilities by determining the vessel's **10** position using satellite signals. The sensing data obtained from these sensors are processed by the processing circuitry **102** to identify one or more anomalies in surfaces of other vessels. Variations of the sensor suite may include thermal cameras for detecting heat signatures, infrared sensors for night-time operations, and multi-spectral sensors for enhanced detection capabilities in diverse environments.

**FIG. 2** is an exemplary schematic illustration of exemplary components involved in the passenger transport management from a first marine vessel **10** to a second marine vessel **20** described herein. The general approach and purpose of the approach illustrated in **FIG. 2** is to manage the safe and efficient transport of passengers from a first marine vessel **10** to a second marine vessel **20** by automating the alignment process. The processing circuitry **102** is configured to identify anomalies **34** on the outer surface **22** of the second vessel **20.**

In contexts herein, the "first" marine vessel **10** typically refers to a smaller vessel used for specific tasks such as transporting personnel, including pilots, crew members, medical personnel, and law enforcement officers. This vessel **10** is designed to be agile and capable of maneuvering close to larger ships, often operating in various sea conditions to fulfill its role efficiently. The "second" marine vessel **20** is generally a larger ship (at the very least in relation to the first vessel **10**), which could be a commercial vessel, ferry, cargo ship, or any substantial marine platform that requires regular interaction with smaller vessels for operational or logistical reasons. The larger size of the second marine vessel **20** is due to its primary functions, such as transporting goods, passengers, or performing large-scale maritime activities. Its size provides the necessary stability, capacity, and facilities required for these operations.

Managing the transport of passengers between the first and second marine vessels **10, 20** is an important aspect of maritime activities for several reasons. Firstly, the second vessel **20** may not be able to dock at smaller ports or harbors due to its size and draft, necessitating the use of smaller vessels **10** to transfer personnel and passengers (and optionally materials). Secondly, the transfer of specialized personnel such as pilots is may be used for navigating the second vessel **20** safely through constrained or congested waterways. Additionally, in emergency situations, smaller vessels are often required to transport medical personnel or law enforcement officers swiftly to the second vessel. As discussed herein, the process of transferring passengers between these vessels **10, 20** is challenging due to for example the dynamic and often unpredictable nature of marine environments. Therefore, it is desirable to manage the transport of passengers between these vessels **10, 20** efficiently and safely.

The first part of **FIG. 2** is the activation of a passenger transport mode **30.** This may occur in various ways to facilitate the efficient transfer of passengers between the vessels **10, 20.** The passenger transport mode **30** may be automatically initiated when sensors **12** on the first vessel **10** detect the presence of the second vessel **20,** or when the first vessel **10** enters a communicative range where anomalies can be transmitted between the vessels **10, 20.** Alternatively, activation of the mode **30** can be manually triggered by the user, such as through a physical button or a touchpad for example located on the display device **110.** The manual approach may provide the user with greater control, allowing them to decide when conditions are suitable for alignment, especially if excessive waves make immediate aligning unsafe. Additionally, manual activation can conserve power, as sensors **12** can remain in standby mode until the user determines that activation is necessary.

The procedure of **FIG. 2** follows by identifying at least one anomaly **34** in the outer surface **22** of the second marine vessel **20.** An "anomaly", in this context, refers to a deviation from a substantially flat surface of the second vessel **20.** This deviation could be structural features such as ladders, openings, or other transportation structures mounted to the second marine vessel **20** and designed to facilitate the transfer of passengers. The term "substantially flat" refers to a surface that appears smooth and even, lacking significant protrusions or indentations. In marine vessels, this typically describes the main expanse of the hull, which is generally uninterrupted by additional structures. Although the sides of a ship's hull may have some curvature for hydrodynamic efficiency, these curves are gentle enough that they appear flat from the perspective of the first vessel **10.** Essentially, the curvature is minimal in the context of alignment, allowing the surface to be treated as flat for purposes described herein. An anomaly **34,** then, would be any deviation from this smooth surface, such as a transportation structure (e.g. ladder, gangway, etc.) or opening, which provides functionality for accommodation of the first vessel **10** and/or its passengers. It could in some examples also be a reflective element deliberately arranged at the second vessel **20** designed to be identifiable using sensing technologies. These structural features are specifically designed to interrupt the flatness to accommodate operations such as safe boarding or disembarkation of personnel.

The term "identify" refers to the ability of the processing circuitry **102** to detect and recognize specific deviations from the expected flat surface of the second vessel **20.** The "outer surface" **22** generally refers to the external part of the second vessel **20** that is exposed to the environment, including areas such as the hull (the main body of the vessel **20**). The purpose of identifying the anomalies **34** is to determine locations that can accommodate the first vessel **10** or the passengers it carries. In these context, "accommodate" means to provide a suitable area that enables the safe placement of the first vessel **10** in vicinity of the second vessel **20** such that passengers can be transported. Such areas typically include features like ladders for climbing or openings where the first vessel **10** can at least partially, sometimes fully, enter the second vessel **20,** which are specifically designed to facilitate these operations.

It shall be noted that there is a distinction between accommodating the first vessel **10** and accommodating one or more passengers transported thereby. This distinction lies in the functional purpose of the structural features identified as anomalies **34** on the second vessel's **20** outer surface **22.** An opening in the hull, for instance, is capable of accommodating both the first vessel **10** and the passengers. This is because the opening can provide docking point where the first vessel **10** can be securely positioned, allowing passengers to disembark directly onto the second vessel **20.** In contrast, a ladder on the outer surface is designed specifically to accommodate passengers but not the vessel **10** itself. The ladder provides a transportation structure for passengers to climb aboard but does not offer a docking point for the first vessel **10** to physically connect with the second vessel **20.** The connection in this case may be the parallel positioning of the two vessels **10, 20** in a longitudinal direction. In contrast, a ladder on the outer surface **22** is designed specifically to accommodate passengers but not the first vessel **10** itself. The ladder provides a transportation structure for passengers to climb aboard but does not offer a docking point for the first vessel **10** to physically connect with the second vessel. In this case, the connection involves the parallel positioning of the two vessels **10, 20** next to each other in the driving direction. Other examples include a docking platform or ramp, which can accommodate the first vessel **10** by providing a stable surface for docking, thus facilitating the transfer of passengers. Conversely, handrails or ropes might only accommodate passengers by assisting them during the transfer process without providing a docking facility for the first vessel **10.**

In some examples, the identification of the at least one anomaly **34** may involve obtaining sensing data **32** of the outer surface **22** of the second marine vessel **20.** This data is collected using sensors **12** mounted on the first marine vessel **10.** These sensors **12,** which can include lidar sensors, (4D) radar sensors, IMUs, positioning sensors, and cameras, are strategically placed on the first vessel **10** to provide coverage of the second vessel's **20** outer surface **22.** Typically, they are mounted on the bow or sides of the vessel **10** to improve their field of view and ensure accurate detection of any structural features. The sensing data **32** obtained captures detailed information about the surface contours of the second vessel **20.**

For example using lidar sensors and lidar data, the identification would work as an "hole detection algorithm". Lidar technology works by emitting laser pulses towards the target surface and measuring the time it takes for the reflected light to return. This process creates a high-resolution 3D map of the outer surface **22.** When the lidar sensor scans the outer surface **22,** it measures distances to various points. If there is a significant difference in distance between neighboring points, this can indicate an anomaly **34.** For example, if the lidar detects a sequence of points with distances of 10 meters, then suddenly 20 meters, followed by more 20 meters, and then back to 10 meters, it suggests the presence of a depression or hole. This pattern indicates that the lidar pulses are traveling further in certain areas, revealing an opening. It may also be the case that the signals are not reflected back, due to surfaces that project the signals in a direction not reachable by the lidar sensors to retrieve the signals. Hence, the lidar data aims to find areas where there are abrupt changes in distance measurements due to e.g. one or more of an absence and deviation in the distance measurements. High-resolution lidar may be particularly effective for this task, as it can capture fine details and subtle variations on the outer surface **22,** especially in poor visibility conditions.

Identifying steps or smaller features, like ladders, can be more complex. However, with sufficient resolution, the lidar sensor can detect these by examining the edges and comparing them with adjacent data points. By identifying significant changes between points that should be contiguous, the processing circuitry **102** can construct a detailed map of potential anomalies **34.**

Similar to lidar sensors, radar sensors function by emitting radio waves and measuring the time it takes for the reflections to return from the surfaces they encounter. In the context of identifying anomalies **34** on the second vessel **20,** radar sensors can offer long-range detection and are effective even in challenging weather conditions, such as fog or rain. These sensors can measure the distance and shape of the vessel's **20** outer surface **22** by analyzing the time and frequency shifts of the returned signals. Anomalies **34** are detected when there are inconsistencies in the expected radar return patterns, indicating features like openings or protrusions. The processing circuitry **102** uses algorithms to interpret these changes, identifying potential anomalies **34** by recognizing deviations from uniform surface reflections. The radar sensors' ability to penetrate atmospheric disturbances can make it a valuable tool for consistent anomaly detection.

Cameras mounted on the first vessel **10** capture visual data of the second vessel's **20** outer surface **22.** This image data may be processed using image recognition algorithms to identify structural features that serve as anomalies **34.** Techniques such as edge detection, pattern recognition, and contrast analysis may be employed to discern features like transportation structures or openings. For example, the processing circuitry **102** might employ machine learning models trained to recognize specific shapes or textures indicative of structure serving as anomalies **34.** By analyzing the captured images for these characteristics, the processing circuitry **102** can pinpoint suitable areas for accommodating the vessel **10** and/or passengers thereof.

Positioning sensors, such as GPS or GNSS, provide location data of both the smaller and second vessels **10, 20.** This information can be used for aligning the first vessel **10** with identified anomalies **34.** The positioning data may indicate the exact location of accommodating locations **24,** allowing the processing circuitry **102** to generate navigation instructions. When complemented by IMUs, the processing circuitry **102** may obtain additional data on the vessel's **10** movement and orientation. IMUs provide real-time updates on acceleration, rotation, and tilt, which help maintain stability and accuracy during aligning maneuvers. By integrating positioning data with IMU feedback, the processing circuitry **102** may ensure smooth alignment, compensating for dynamic sea conditions and enhancing the safety and efficiency of passenger transfers.

In some examples, the processing circuitry **102** is designed to dynamically adjust the sensitivity of the sensors **12** based on prevailing environmental conditions. This adaptability can ensure that the processing circuitry **102** maintains desirable performance regardless of external factors such as weather, lighting, or sea state. For instance, during foggy or rainy conditions, the processing circuitry **102** might enhance the sensitivity of radar sensors to penetrate atmospheric disturbances more effectively, ensuring consistent detection of anomalies **34** on the second vessel's **20** outer surface **22.** Similarly, in low-light situations, camera settings could be adjusted to increase exposure or employ infrared capabilities, allowing for clearer image data capture. By continuously monitoring environmental inputs, the processing circuitry **102** can make real-time adjustments to sensor parameters, such as range, resolution, and frequency, ensuring that the data collected remains accurate and reliable.

In some examples, sensor technology is not necessarily used for anomaly identification. Instead, the first vessel **10** may be in operative communication with the second vessel **20.** The communication may be based on any communication standards known in the art, such as Wi-Fi, Bluetooth, Automatic Identification System (AIS), VHF radio, or satellite communication. This communication allows the first vessel **10** to obtain detailed vessel properties of the outer surface **22** directly from the second vessel **20.** For example, the second vessel **20** might know that a certain opening is located on its starboard side at a specific height above the waterline, which is used for accommodating smaller vessels, such as the first vessel **10.**

In another scenario, the first vessel **10** communicates with an external server to obtain vessel properties of the outer surface **22** of the second vessel **20.** This external server may store in a database vessel designs, structural features, and real-time updates that the first vessel **10** can access. By retrieving this information, for example using any of the communication methods described above, the processing circuitry **102** can identify anomalies **34** without direct sensor input, using the detailed vessel properties provided by the server. This approach can allow for a centralized source of information, potentially offering a broader range of data, including historical and predictive analytics. The server may ensure that the first vessel **10** has access to consistent and reliable data, facilitating efficient and safe passenger transport operations.

In some examples, the processing circuitry **102** may be configured to access records and obtain previous aligning events, which provide insights into past docking experiences. This historical data includes information about anomalies that were successfully used for accommodating vessels, along with any challenges or adjustments made during those events. By analyzing this data, the processing circuitry **102** can identify patterns and trends that inform the current identification of anomalies **34.** For instance, if certain anomalies have consistently proven reliable for purposes of accommodating a vessel under specific conditions, the processing circuitry **102** can prioritize these locations in future operations. Additionally, historical data allows the processing circuitry **102** to anticipate potential issues and make proactive adjustments to improve the passenger transport management. Thus, by leveraging past experiences the processing circuitry **102** can refine its anomaly detection process, leading to more accurate and reliable identification outcomes.

The process continues by the processing circuitry **102** determining an accommodating location **24.** This location **24** is determined based on characteristics of the anomaly **34** and its suitability for safely transferring passengers. In this context, the term "accommodating location" refers to a specific area at (for example at least partly within the outer structure **22**) or near (for example adjacent to) the second vessel **20** that is suitable for accommodating the first vessel **10** and facilitating the safe transfer of passengers. The accommodating location **24** is strategically determined based on the identified anomalies **34,** such as ladders or openings, which indicate structural features designed for embarking and disembarking of passengers.

The process of determining the accommodating location **24** is largely influenced by the method used to identify anomalies **34.** For instance, when cameras are used, visual data is analyzed to locate structural features by recognizing patterns and shapes indicative of accommodation locations **24.** In contrast, lidar sensors provide distance measurements that reveal deviations in the outer surface **22,** helping to identify physical openings or protrusions. Alternatively, when anomalies **34** are communicated directly from an external server or the second vessel, the accommodating location **24** is determined using pre-existing data about the vessel's **20** structure. In any event, the goal of this process is to find a location that effectively supports the accommodation of the first vessel **10,** enabling passenger transport. The accommodating location **24** might be outside the outer surface **22,** e.g. the first vessel **10** is positioned adjacent to a ladder, allowing passengers to climb up to an opening. Alternatively, the accommodating location **24** could be within the outer surface **22,** such as a recessed area or hole where the vessel **10** can at least partially enter, providing direct access for passengers. Other examples include a docking platform that extends from the second vessel **20,** offering a stable surface for the first vessel **10** to dock alongside, or a specialized gangway designed to bridge the gap between the vessels **10, 20,** facilitating easy boarding.

Once the accommodating location **24** is determined, the process involves generating driving instructions **36** to guide the first marine vessel **10** to this location. The driving instructions refer to a set of navigational commands or guidance cues that direct the vessel's **10** movement and positioning. These instructions can be delivered through a user interface, for example of the display device **110,** for manual control by the operator or integrated into an autonomous system, for example the ADAS **112,** for automated maneuvering. The term "cause positioning" encompasses various actions that ensure the first vessel **10** is placed relative to the second vessel **20.** This can include docking, where the first vessel **10** is secured alongside the second vessel **20** for passenger transfer. Alternatively, it can involve aligning the first vessel **10** close to the second vessel **20,** and optionally maintaining the same speed if the second vessel **20** is in motion. This ensures that the vessels **10, 20** remain synchronized, enabling safe and efficient boarding or disembarkation without the need for a full stop. The driving instructions can ensure precise control over the vessel's **10** speed, angle, and distance, adapting to dynamic conditions to maintain stability and safety during the operation, such that aligning of the vessels **10, 20** is enabled.

As indicated in **FIG. 2****,** the driving instructions **36** may be provided for either one or both of the display device **110** and the ADAS **112,** implying that the instructions **36** may be used as guidance by the operator, for autonomous control, or a combination thereof.

Based on the driving instructions **36,** the processing circuitry **102** may be configured to automatically set a predefined speed. This involves the processing circuitry **102** determining the desired speed for the first marine vessel **10** to approach the accommodating location **24** safely and efficiently, as well as maintaining said accommodating location **24,** even in cases where the second vessel **20** is moving. By controlling the speed, the processing circuitry **102** can ensure that the vessel **10** maintains stability and reduces the risk of collisions or abrupt movements. This automatic speed adjustment considers factors such as the distance to the accommodating location **24,** current environmental conditions, and the type of anomaly **34** identified. The predefined speed setting can help standardizing the alignment process, reducing variability and enhancing overall safety.

In some examples, the control is not just speed-based, but also steering-based, effectively involving autonomous control of the vessel **10** without direct operator influence. Here, the processing circuitry **102** may facilitate autonomous control of the first marine vessel **10** along a generated alignment path. This path is generated based on the driving instructions **36** and leads from the current position of the vessel **10** to the accommodating location **24.** The alignment path is a calculated trajectory that considers operational and environmental factors such as the vessel's **10** current orientation, speed, and sea state to ensure a smooth approach. The processing circuitry **102** autonomously navigates the vessel **10** along this path, continuously adjusting its course and speed to maintain desirable alignment.

In manual driving scenarios (or in combinations of manual and autonomous driving), the processing circuitry **102** may control the display device **110** to present the driving instructions as visual guidance. This feature provides the vessel operator with real-time, intuitive navigation cues, simplifying the passenger transport and vessel alignment processes. By translating complex instructions into visual formats, the processing circuitry **102** may assist the operator in understanding required maneuvers more clearly, reducing the likelihood of errors and enhancing docking precision.

The visual guidance may include visual cues displayed on the display device **110** to represent both the first marine vessel **10** and the second marine vessel **20.** A first visual cue can indicate the position of the first vessel **10,** while a second cue can mark the accommodating location **24** on the second vessel **20.** Aligning these two cues on the display device **110** signals correct positioning, ensuring the operator achieves the optimal docking alignment, thus facilitating safe passenger transfer. More advanced visual guidance can also be provided to assist the operator, including but not limited to augmented reality overlays, trajectory predictions, real-time environmental condition indicators, and dynamic path suggestions that adapt to changing conditions.

The processing circuitry **102** may in some examples be configured to generate and display a 3D model of the second marine vessel **20** on the display device **110.** This model can offer a detailed, interactive view of the second vessel's **20** structure, helping the operator visualize potential accommodating locations **24** and plan maneuvers with greater accuracy. The 3D representation improves spatial understanding and aids in making informed docking decisions.

Further enhancing the display device **110,** the processing circuitry **102** can provide multiple suggestions for accommodating locations **24.** This feature allows operators to select the most suitable accommodating location **24** based on current conditions or operational requirements. The availability of multiple locations can be due to varying environmental conditions, such as wind direction or sea currents, which might make certain accommodating locations **24** points more favorable than others in cases where the second marine vessel **20** is associated with a plurality of different sets of anomalies **34,** each anomaly indicating a separate accommodating location **24.** Additionally, operational needs, such as the urgency of passenger transfer or specific equipment requirements, can influence the choice of accommodating location **24.** By offering a range of options, the processing circuitry **102** can increase flexibility and decision-making efficiency.

In relation to the examples above (but not necessarily dependent thereof), the processing circuitry **102** can be configured to generate a prioritization scheme for a plurality of anomaly sets based on their relative spatial properties. This prioritization allows the processing circuitry **102** to determine the most suitable accommodating locations **24** by considering various factors. For instance, the processing circuitry **102** might prioritize anomalies **34** depending on the type of boat the first marine vessel **10** is; larger boats may require more substantial docking structures compared to smaller ones. The number of passengers to be embarking or disembarking the first vessel **10** could influence the choice, with larger groups needing more accessible or spacious accommodating locations **24.** Operational conditions can also play a role, where certain anomalies **34** might be prioritized if they offer quicker accommodation access in urgent situations. Environmental factors such as wind, waves, or tide levels might make some accommodating locations **24** more stable or safer than others. Additionally, the processing circuitry **102** could consider the current traffic or congestion around the second vessel **20,** prioritizing anomalies **34** that offer smoother access paths. The availability of necessary facilities, such as ladders or gangways, at certain accommodating locations **24** might also influence their priority.

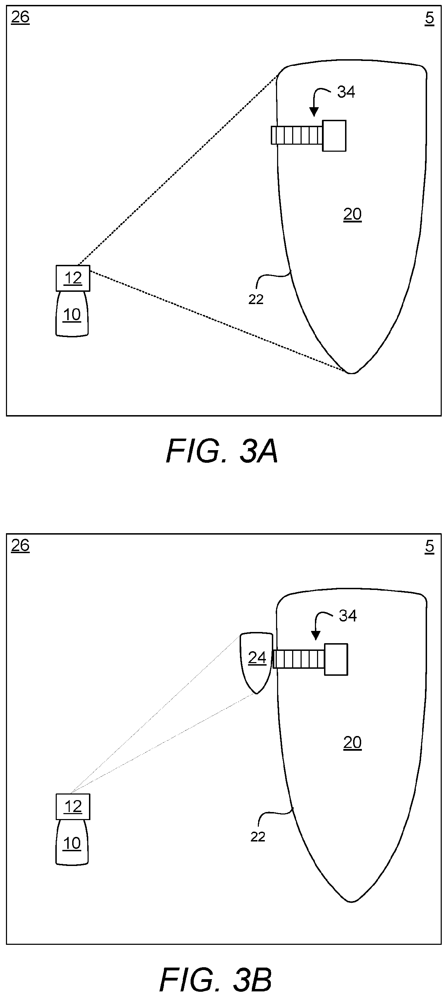

**FIGs. 3A-D** illustrate an exemplary sequential process of passenger transport management, showcasing how a first marine vessel **10** approaches and aligns with a second marine vessel **20** using sensor data to identify anomalies **34.**

In **FIG. 3A****,** the illustration indicates the initial stage where the first marine vessel 10, equipped with sensors **12,** approaches the second marine vessel **20.** The sensors **12** scan the side of the second vessel **20,** aiming to detect anomalies **34** in the outer surface **22** such as ladders or openings. This information is displayed on the display device **110** showing the display window **26,** providing real-time guidance.

In **FIG. 3B****,** the schematic continues from **FIG. 3A****,** illustrating the next phase of passenger transport management. At this stage, the processing circuitry **102** has successfully identified an anomaly **34** in the form of a ladder leading to an opening on the second marine vessel **20.** This identification is based on the sensing data collected by the sensors **12.** As a result, an accommodating location **24** is determined to be adjacent to this ladder, providing a suitable destination for the first marine vessel **10** where the passenger transport can be carried out. This allows passengers to safely climb aboard the second vessel **20** at this location **24,** with the display window **26** showing the operator the accommodating location **24** for desirable alignment. The area of the accommodating location **24** is not limited to any particular size or dimension, as it can accommodate any type of first marine vessel.

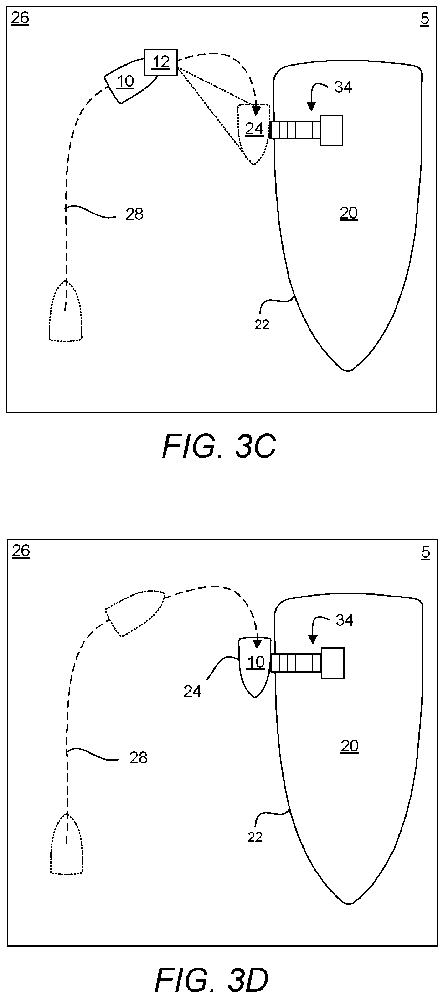

In **FIG. 3C****,** the schematic illustration advances from **FIG. 3B****,** depicting the third phase of passenger transport management. At this point, the first marine vessel **10** is following a generated alignment path **28** that leads towards the accommodating location **24.** The vessel **10** is shown to be halfway along this path **28,** progressing steadily towards the accommodating location **24** adjacent to the identified anomaly **34.** The alignment path **28** is visually represented on the display window **26,** guiding the operator. This stage highlights the vessel's **10** movement and adherence to the calculated trajectory.

In **FIG. 3D****,** the schematic illustration progresses from **FIG. 3C****,** depicting the fourth and final phase of passenger transport management. Here, the first marine vessel **10** has completed the alignment path **28** and is now precisely aligned with the second marine vessel **20.** This alignment ensures that the vessel **10** is positioned at the accommodating location **24,** adjacent to the anomaly **34** identified earlier. The successful completion of the alignment path **28** facilitates the safe and efficient transfer of passengers, with the display window **26** confirming the correct position and alignment, ready for embarking and/or disembarking of passengers.

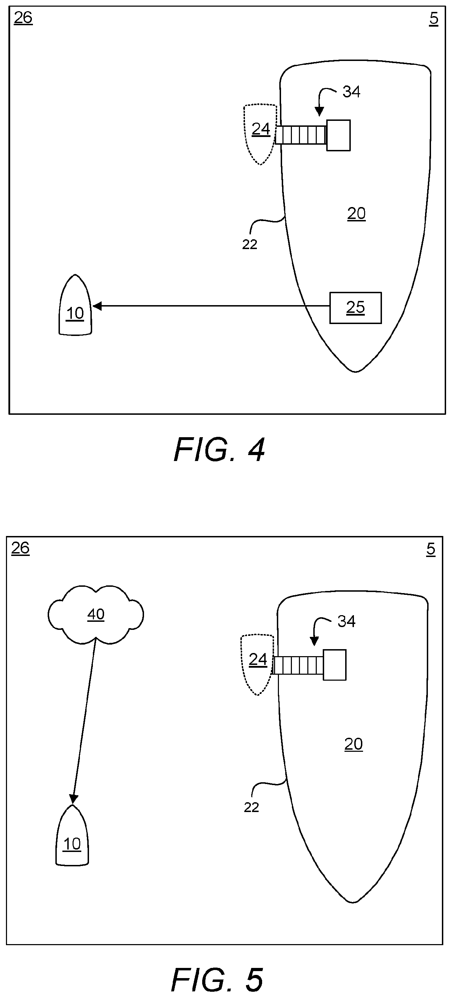

In **FIG. 4****,** as an alternative to using sensors **12,** the processing circuitry **102** obtains anomaly data directly from a vessel system **25** of the second marine vessel **20.** This approach leverages the internal systems and databases of the second vessel **20** to access detailed information about its structural features, such as ladders or accommodating openings. By communicating directly with the second vessel's **20** system **25,** the first marine vessel **10** can identify the suitable accommodating location **24** without relying on sensor data.

In **FIG. 5****,** another alternative is presented where anomaly data is obtained from an external server **40,** specifically a cloud server. This server stores comprehensive data about various vessels, including their structural anomalies and potential accommodating locations. By accessing this centralized database, the first marine vessel **10** can retrieve relevant information about the second marine vessel **20,** allowing it to determine the accommodating location **24** based on pre-stored data. This cloud-based approach provides flexibility and access to a wide range of information.

The examples of **FIG. 4, FIG. 5** and **FIG. 2B** could in some examples be combined, i.e. employing sensor data as well as remote obtaining of the anomaly data.

As seen in all the illustrations of **FIG. 2A to FIG. 5**, the second vessel **20** is typically substantially larger than the first vessel **10,** meaning that the second vessel **20** is at least twice as large as the first vessel **10.**

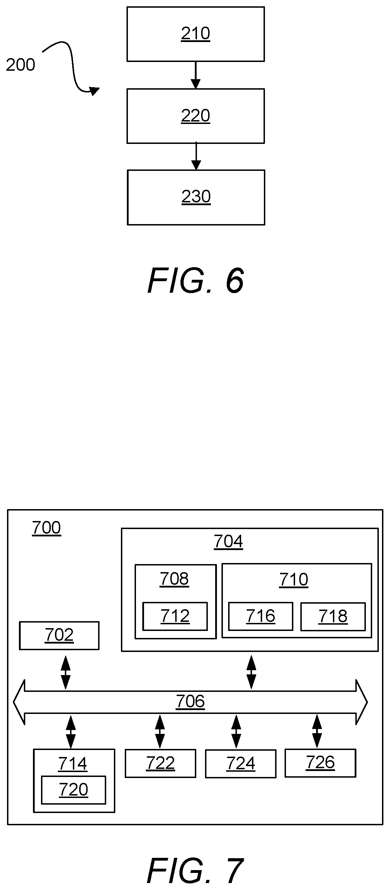

**FIG. 6** is a flowchart of a computer-implemented method **200** for passenger transport management from a first marine vessel to a second marine vessel. The method **200** is carried out by processing circuitry of a computer system. The method **200** comprises identifying **210** at least one anomaly in an outer surface of the second marine vessel, the anomaly indicating a deviation in the outer surface from a substantially flat surface and being adapted to accommodate one or more of the first marine vessel and a passenger transported thereby. The method **200** comprises, based on the anomaly, determining **220** an accommodating location adapted to accommodate the first marine vessel for a subsequent transport of said passengers from the first marine vessel to the second marine vessel. The method **200** comprises generating **230** one or more driving instructions adapted to cause positioning of the first marine vessel at the accommodating location.

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In further examples of the disclosure the following is provided.

Example 1: A computer system (100; 700) for passenger transport management from a first marine vessel (10) to a second marine vessel (20), the computer system (100; 700) comprising processing circuitry (102; 702) configured to identify at least one anomaly (34) in an outer surface (22) of the second marine vessel (20), the anomaly (34) indicating a deviation in the outer surface (22) from a substantially flat surface and being adapted to accommodate one or more of the first marine vessel (10) and a passenger transported thereby; based on the anomaly (34), determine an accommodating location (24) adapted to accommodate the first marine vessel (10) for a subsequent transport of said passengers from the first marine vessel (10) to the second marine vessel (20); and generate one or more driving instructions (36) adapted to cause positioning of the first marine vessel (10) at the accommodating location (24).

Example 2: The computer system (100; 700) of Example 1, wherein the processing circuitry (102; 702) is further configured to obtain sensing data (32) of the outer surface (22) from one or more sensors (12) mounted to the first marine vessel (10); and identify the at least one anomaly (34) by processing the sensing data (32).

Example 3: The computer system (100; 700) of Example 2, the sensors (12) comprising distance sensors, the sensing data (32) comprising distance data, the processing circuitry (102; 702) being further configured to identify one or more portions of the lidar data involving absence and/or deviations in distance measurements; and identify the at least one anomaly (34) where said one or more portions are identified.

Example 4: The computer system (100; 700) of Example 3, wherein the distance sensors are one or more of lidar sensors and radar sensors.

Example 5: The computer system (100; 700) of any of Examples 2-4, the sensors (12) comprising cameras, the sensing data (32) comprising image data, the processing circuitry (102; 702) being further configured to process the image data to identify the anomaly (34).

Example 6: The computer system (100; 700) of any of Examples 2-5, the sensors (12) comprising positioning sensors, the sensing data (32) comprising positioning data indicating a position of the accommodating location (24).

Example 7: The computer system (100; 700) of Example 6, the sensors (12) comprising inertial measurement units, IMUs, the sensing data (32) comprising IMU data.

Example 8: The computer system (100; 700) of any preceding Example, wherein the processing circuitry (102; 702) is further configured to adjust a sensitivity of the sensors (12) based on environmental conditions.

Example 9: The computer system (100; 700) of any preceding Example, the first vessel (10) being in operative communication with the second vessel (20), the first vessel (20) being configured to obtain vessel properties of the outer surface (22) of the second vessel (20) from the second vessel (20), wherein the processing circuitry (102; 702) is configured to identify the at least one anomaly (34) based on the vessel properties of the outer surface (22).

Example 10: The computer system (100; 700) of any preceding Example, the first vessel (10) being in operative communication with an external server (40), the first vessel (20) being configured to obtain vessel properties of the outer surface (22) of the second vessel (20) from the external server (40), wherein the processing circuitry (102; 702) is configured to identify the at least one anomaly (34) based on the vessel properties of the outer surface (22).

Example 11: The computer system (100; 700) of any preceding Example, wherein the second vessel (20) is moving.

Example 12: The computer system (100; 700) of any preceding Example, wherein the processing circuitry (102; 702) is configured to automatically set a predefined speed based on the driving instructions (36).

Example 13: The computer system (100; 700) according to Example 12, wherein the processing circuitry (102; 702) is configured to cause autonomous control of the first marine vessel (10) along a generated alignment path (28) based on the generated driving instructions (34), the alignment path (28) being generated from a current position of the first marine vessel (10) to the accommodating location (24).

Example 14: The computer system (100; 700) according to any preceding Example, wherein the processing circuitry (102; 702) is configured to control a display device (110) of the first marine vessel (10) to display the driving instruction as visual guidance.

Example 15: The computer system (100; 700) according to Example 14, wherein the visual guidance comprises a first visual cue at a visual representation of the first marine vessel (10) and a second visual cue at a visual representation of the second marine vessel (20), the aligning of the first and second visual cues indicating a correct positioning of the first marine vessel (10) at the accommodating location (24).

Example 16: The computer system (100; 700) of any of Examples 14-15, wherein the processing circuitry (102; 702) is configured to provide a plurality of suggestions of accommodating locations (24) to the display device (110).

Example 17: The computer system (100; 700) of any of Examples 14-16, wherein the processing circuitry (102; 702) is further configured to generate a 3D model of the second marine vessel (20); and cause the display device (110) to display the generated 3D model.

Example 18: The computer system (100; 700) of any preceding Example, the anomaly (34) being indicative of one or more of a reflective element attached to the outer surface (22); a transportation structure mounted to the second marine vessel (20), and an opening in the outer surface (22) of the second marine vessel (20).

Example 19: The computer system (100; 700) of any preceding Example, wherein the processing circuitry (102; 702) is further configured to obtain historical anomaly data being indicative of previous aligning events; and identify said at least one anomaly (34) based on the historical anomaly data.

Example 20: The computer system (100; 700) of any preceding Example, wherein the processing circuitry (102; 702) is further configured to actuate an alert mechanism (116) of the first marine vessel (10) to cause a notification in response to an identification of said at least one anomaly (34).

Example 21: The computer system (100; 700) of any preceding Example, wherein the processing circuitry (102; 702) is further configured to generate a prioritization scheme of a plurality of anomalies based on relative spatial properties thereof.

Example 22: The computer system (100; 700) of any preceding Example, wherein the processing circuitry (102; 702) is further configured to provide force feedback to a steering device (118) of the first marine vessel (10) based on the driving instructions (36).

Example 23: A marine vessel (10) comprising the computer system (100; 700) of any of Examples 1-22.

Example 24: A computer-implemented method (200) for passenger transport management from a first marine vessel (10) to a second marine vessel (20), comprising identifying (210), by processing circuitry (102; 702) of a computer system (100; 700), at least one anomaly (34) in an outer surface (22) of the second marine vessel (20), the anomaly (34) indicating a deviation in the outer surface (22) from a substantially flat surface and being adapted to accommodate one or more of the first marine vessel (10) and a passenger transported thereby; based on the anomaly (34), determining (220), by the processing circuitry (102; 702), an accommodating location (24) adapted to accommodate the first marine vessel (10) for a subsequent transport of said passengers from the first marine vessel (10) to the second marine vessel (20); and generating (230), by the processing circuitry (102; 702), one or more driving instructions (36) adapted to cause positioning of the first marine vessel (10) at the accommodating location (24).

Example 25: A computer program product comprising program code for performing, when executed by the processing circuitry (102; 702), the method (200) of Example 24.

Example 26: A non-transitory computer-readable storage medium comprising instructions, which when executed by the processing circuitry (102; 702), cause the processing circuitry (102; 702) to perform the method (200) of Example 24.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 700) for passenger transport management from a first marine vessel (10) to a second marine vessel (20), the computer system (100; 700) comprising processing circuitry (102; 702) configured to:
identify at least one anomaly (34) in an outer surface (22) of the second marine vessel (20), the anomaly (34) indicating a deviation in the outer surface (22) from a substantially flat surface and being adapted to accommodate one or more of the first marine vessel (10) and a passenger transported thereby;
based on the anomaly (34), determine an accommodating location (24) adapted to accommodate the first marine vessel (10) for a subsequent transport of said passengers from the first marine vessel (10) to the second marine vessel (20); and
generate one or more driving instructions (36) adapted to cause positioning of the first marine vessel (10) at the accommodating location (24).

2. The computer system (100; 700) of claim 1, wherein the processing circuitry (102; 702) is further configured to:
obtain sensing data (32) of the outer surface (22) from one or more sensors (12) mounted to the first marine vessel (10); and
identify the at least one anomaly (34) by processing the sensing data (32).

3. The computer system (100; 700) of claim 2, the sensors (12) comprising distance sensors, the sensing data (32) comprising distance data, the processing circuitry (102; 702) being further configured to:
identify one or more portions of the lidar data involving absence and/or deviations in distance measurements;
and identify the at least one anomaly (34) where said one or more portions are identified.

4. The computer system (100; 700) of claim 3, wherein the distance sensors are one or more of lidar sensors and radar sensors.

5. The computer system (100; 700) of any of claims 2-4, the sensors (12) comprising cameras, the sensing data (32) comprising image data, the processing circuitry (102; 702) being further configured to process the image data to identify the anomaly (34).

6. The computer system (100; 700) of any of claims 2-5, the sensors (12) comprising positioning sensors, the sensing data (32) comprising positioning data indicating a position of the accommodating location (24).

7. The computer system (100; 700) of claim 6, the sensors (12) comprising inertial measurement units, IMUs, the sensing data (32) comprising IMU data.

8. The computer system (100; 700) of any preceding claim, wherein the processing circuitry (102; 702) of the first vessel (10) is in operative communication with (i) processing circuitry of the second vessel (20), or (ii) processing circuitry of an external server (40), the first vessel (20) being configured to obtain vessel properties of the outer surface (22) of the second vessel (20) from (i) the second vessel (20), or (ii) the external server (40), wherein the processing circuitry (102; 702) is configured to identify the at least one anomaly (34) based on the vessel properties of the outer surface (22).

9. The computer system (100; 700) of any preceding claim, wherein the processing circuitry (102; 702) is configured to automatically set a predefined speed based on the driving instructions (36).

10. The computer system (100; 700) according to claim 9, wherein the processing circuitry (102; 702) is configured to cause autonomous control of the first marine vessel (10) along a generated alignment path (28) based on the generated driving instructions (34), the alignment path (28) being generated from a current position of the first marine vessel (10) to the accommodating location (24).

11. The computer system (100; 700) according to any preceding claim, wherein the processing circuitry (102; 702) is configured control a display device (110) of the first marine vessel (10) to display the driving instruction as visual guidance,
wherein the visual guidance comprises a first visual cue at a visual representation of the first marine vessel (10) and a second visual cue at a visual representation of the second marine vessel (20),
wherein the aligning of the first and second visual cues indicates a correct positioning of the first marine vessel (10) at the accommodating location (24).

12. A marine vessel (10) comprising the computer system (100; 700) of any of claims 1-11.

13. A computer-implemented method (200) for passenger transport management from a first marine vessel (10) to a second marine vessel (20), comprising:
identifying (210), by processing circuitry (102; 702) of a computer system (100; 700), at least one anomaly (34) in an outer surface (22) of the second marine vessel (20), the anomaly (34) indicating a deviation in the outer surface (22) from a substantially flat surface and being adapted to accommodate one or more of the first marine vessel (10) and a passenger transported thereby;
based on the anomaly (34), determining (220), by the processing circuitry (102; 702), an accommodating location (24) adapted to accommodate the first marine vessel (10) for a subsequent transport of said passengers from the first marine vessel (10) to the second marine vessel (20); and
generating (230), by the processing circuitry (102; 702), one or more driving instructions (36) adapted to cause positioning of the first marine vessel (10) at the accommodating location (24).

14. A computer program product comprising program code for performing, when executed by the processing circuitry (102; 702), the method (200) of claim 13.

15. A non-transitory computer-readable storage medium comprising instructions, which when executed by the processing circuitry (102; 702), cause the processing circuitry (102; 702) to perform the method (200) of claim 13.
